# EUROPÄISCHE PATENTSCHRIFT

(11) **EP 1 594 914 B1**
(45) Veröffentlichungstag und Bekanntmachung des Hinweises auf die Patenterteilung: **20.09.2017**
(21) Anmeldenummer: 04703362.6
(22) Anmeldetag: 20.01.2004
(51) Int. Cl.: C08L 77/00, C08L 77/02, C08L 77/06, C08L 77/12, A22C 13/00, C08L 29/04, C08J 5/18

(54) **RAUCHDURCHLÄSSIGE NAHRUNGMITTELHÜLLE AUF BASIS VON POLYAMID AND WASSERLÖSCHLICHEN POLYMEREN**
SMOKE-PERMEABLE FOOD ENVELOPE BASED ON POLYAMIDE AND WATER-SOLUBLE POLYMERS
ENVELOPPE POUR PRODUITS ALIMENTAIRES PERMEABLE A LA FUMEE, A BASE DE POLYAMIDE ET DE POLYMERES SOLUBLES DANS L'EAU

(30) Priorität: 24.01.2003 DE 10302960
(43) Veröffentlichungstag der Anmeldung: 16.11.2005
(73) Patentinhaber: Kalle GmbH, 65203 Wiesbaden (DE)
(72) Erfinder: DELIUS, Ulrich, 60529 Frankfurt (DE); SCHMIDT, Michael, 65375 Oestrich-Winkel (DE); STALBERG, Stefanie, 65232 Taunusstein-Wehen (DE)
(74) Vertreter: Plate, Jürgen
(86) Internationale Anmeldenummer: PCT/EP2004/000397
(87) Internationale Veröffentlichungsnummer: WO 2004/065466

(56) Entgegenhaltungen:
- EP-A- 0 217 069
- WO-A-02/082913
- WO-A-02/094023
- WO-A-03/073861
- WO-A-03/073862
- WO-A1-02/078455
- "Prüfung von Kunstoff-Folien, Elastomerfolien, Papier, Pappe und anderen Flächengebilden. Bestimmung der Wasserdampfdurchlässigkeit. Teil 1: Gravimetrisches Verfahren -- Testing of plastic and elastomer films, paper, board and other sheet materials. Determination of water vapour transmission. Part 1:", DIN NORM,, vol. 53122-1, 1 August 2001 (2001-08-01), page 9pp, XP009101220,

## Beschreibung

Die vorliegende Erfindung betrifft eine rauchdurchlässige, feuchtigkeitsbeständige, schlauchförmige, biaxial orientierte Nahrungsmittelhülle. Sie betrifft daneben ein Verfahren zur Herstellung der Hülle und deren Verwendung als künstliche Wursthülle für geräucherte Wurstsorten.

Zur Herstellung von geräucherten Wurstwaren sind bisher hauptsächlich Hüllen auf Basis von regenerierter Cellulose oder von Kollagen eingesetzt worden. Die Herstellung dieser Hüllen ist jedoch technisch aufwendig. So werden Cellulosehüllen in der Regel nach dem Viskoseverfahren hergestellt. In diesem Verfahren wird Cellulose zunächst mit Hilfe von Natronlauge und Schwefelkohlenstoff (CS₂) in Cellulosexanthogenat umgewandelt. Die dabei entstehende sogenannte Viskoselösung muß zunächst mehrere Tage reifen, bevor sie den Darmspinnmaschinen zugeleitet wird. Diese Maschinen bestehen im wesentlichen aus einer Spinndüse, Fällbädern, Wasch- und Präparationsbädern sowie Trockenstationen. In den Fällbädern wird das Cellulosexanthogenat zu Cellulose regeneriert. Kollagendärme - auch als Hautfaserdärme bezeichnet - bestehen aus gehärtetem Bindegewebseiweiß. Bei ihrer Herstellung wird zunächst Bindegewebe aus Tierhäuten mechanisch zerkleinert und chemisch aufgeschlossen. Die dabei entstehende homogenisierte Masse wird dann in einem Trocken- oder Naßspinnverfahren weiterverarbeitet. Im Naßspinnverfahren wird die Kollagenmasse nach dem Extrudieren durch eine Ringdüse in einem koagulierend wirkenden Fällbad verfestigt (G. Effenberger, Wursthüllen - Kunstdarm, Holzmann-Buchverlag, Bad Wörishofen, 2. Aufl. [1991] S. 21 - 27).

Cellulose- und Kollagenhüllen sind nicht nur für Rauch, sondern auch für Wasserdampf sehr gut durchlässig. Die Durchlässigkeit beträgt allgemein mehr als 500 g/m² · d. Durch die hohe Wasserdampfdurchlässigkeit der Hülle trocknet die Wurst jedoch in unerwünschter Weise aus, wenn sie einige Zeit gelagert wird.

Ein weiterer Nachteil von Kollagen- und Cellulosehüllen besteht in den hohen Herstellkosten aufgrund der genannten naßchemischen Prozesse.

Für ungeräucherte Wurstwaren werden heute in großem Umfang preiswerte Hüllen aus thermoplastischen Kunststoffen eingesetzt. Übliche Kunststoffe sind Polyamide, Polyester und Vinylchlorid-Copolymere. Die Hüllen können ein- oder mehrschichtig sein. In den mehrschichtigen Hüllen sind häufig noch Schichten aus Polyolefin vorhanden. Der entscheidende Vorteil dieser Hüllen liegt in der technisch relativ einfachen und kostengünstigen Herstellung. Hüllen aus thermoplastischem Kunststoff haben eine Wasserdampfdurchlässigkeit (WDD) von etwa 3 bis 20 g/m² · d. Sie sind damit deutlich weniger durchlässig als Hüllen aus regenerierter Cellulose oder Kollagen. Wurstwaren in einer solchen Hülle verlieren daher bei der Lagerung deutlich weniger an Gewicht. Aus thermoplastischem Kunststoff, etwa aus Polyamid, hergestellte Hüllen wurden bisher allgemein für nicht rauchdurchlässig und damit nicht räucherbar gehalten.

Es sind jedoch auch einige räucherbare Kunststoffhüllen bekannt. So ist in der EP-A 139 888 ein Verfahren zum Räuchern von Lebensmitteln in einer Hülle aus aliphatischem Polyamid offenbart. Das Polyamid nimmt mindestens 3 Gew.-%, bevorzugt mindestens 5 Gew.-% an Wasser auf. Geräuchert wird daher in Gegenwart von Wasser oder Wasserdampf, was eine klimageregelte Räucherkammer erfordert.

Eine räucherbare Folie zur Verpackung von Lebensmitteln ist auch in der EP-A 217 069 beschrieben. Sie umfaßt mindestens eine Schicht, die aus einem Gemisch von Polyamid, einem Ethylen/Vinylalkohol-Copolymer (EVOH) und Polyolefin besteht, wobei die Bestandteile der Schicht in einem bestimmten Gewichtsverhältnis stehen. Die Schicht hat eine Wasserdampfdurchlässigkeit von weniger als 40 g/m² · d bei einer Temperatur von 40 °C und einer relativen Luftfeuchte von 90 %. Dies ist jedoch nur eine geringe Steigerung gegenüber dem oben genannten Wertebereich fürthermoplastische Hüllen. Entsprechend ist unter üblichen Bedingungen auch kein zufriedenstellender Rauchdurchgang zu erwarten.

Es besteht damit nach wie vor die Aufgabe, eine Kunststoffhülle zur Verfügung zu stellen, die für Rauch eine sehr gute Durchlässigkeit aufweist, ohne daß besondere Bedingungen (bestimmte Luftfeuchtigkeit, bestimmte Temperatur usw.) beim Räuchern eingehalten werden müssen. Insbesondere soll sowohl mit Heißrauch (etwa 70 bis 80°C; besonders für Brühwurst) als auch mit Kaltrauch (etwa 20 bis 35°C, besonders für Koch- und Rohwurst) eine intensive Farb- und Geschmacksübertragung auf das Wurstbrät möglich sein. Dem Fachmann ist geläufig, daß die Diffusion von Gasen durch Kunststoffe stark temperaturabhängig ist. Damit erfordert die Anwendung von Kaltrauch a priori eine höhere Permeabilität des Kunststoffs als die von Heißrauch.

Die Hülle soll darüber hinaus kostengünstig und einfach auf thermoplastischem Weg herstellbar sein. Sie soll rauchdurchlässig und beständig auch gegen heißes Wasser und Wasserdampf sein, damit sie auch bei der Herstellung von Brühwurst eingesetzt werden kann. Die Wasserdampfdurchlässigkeit der Hülle (bestimmt gemäß DIN 53 122) soll mindestens 40 g/m² · d, jedoch nicht mehr als 200 g/m² · d betragen bei einer einseitigen Beaufschlagung der Hülle mit Luft, die eine Temperatur von 23 °C und eine relative Luftfeuchte von 85 % aufweist, damit die in der Hülle befindlichen Nahrungsmittel nach dem Räuchern möglichst wenig austrocknen.

Gelöst wurde die Aufgabe mit einer Hülle aus einem Gemisch, das aliphatisches Polyamid und/oder aliphatisches Copolyamid, mindestens ein thermoplastifizierbares, wasserlösliches, organisches Polymer sowie gegebenenfalls Zusätze von weiteren organischen oder anorganischen Stoffen enthält. Als "wasserlöslich" werden im Zusammenhang mit der vorliegenden Erfindung Polymere bezeichnet, deren Löslichkeit in Wasser von 80 °C mindestens 20 g/l beträgt.

Wasserlösliche synthetische Polymere, insbesondere Polyvinylalkohol (PVAL), werden schon länger zur Herstellung bestimmter semipermeabler Membranen verwendet. Die Membrangewinnung erfolgt grundsätzlich aus Lösungen. Der über einen Fällprozeß entstandene Film muß anschließend vernetzt werden, um die Wasserlöslichkeit aufzuheben.

Über eine thermoplastische Verformung wasserlöslicher Polymere ist bisher wenig bekannt. Aufgrund ihrer hohen Polarität und der damit verbundenen intermolekularen Wechselwirkungen liegt ihr Schmelzpunkt meist deutlich über der Zersetzungstemperatur. Gegenstände aus wasserlöslichen Polymeren müssen überdies einer nachträglichen Vernetzungsbehandlung unterworfen werden, um sie in der späteren Anwendung feuchteresistent zu machen.

Überraschenderweise wurde festgestellt, daß die Blends aus aliphatischem (Co-)-Polyamid und wasserlöslichem Polymer
- ohne Nachvernetzung wasserfest sind, d.h. daß durch kaltes oder heißes Wasser praktisch kein wasserlösliches Polymer herausgelöst wird,
- zersetzungsfrei extrudierbar und zu Schlauchfolien verformbar sind,
- sich mittels Schlauchstreckverfahren zu Lebensmittelhüllen mit vorteilhaften mechanischen Eigenschaften verarbeiten lassen, und
- Wasserdampf- und Rauchdurchlässigkeiten im oben geforderten Bereich zeigen.

Blends aus Polyamiden und wasserlöslichen Polymeren sind prinzipiell bereits bekannt. Die einschlägigen Druckschriften beziehen sich jedoch nicht auf das Anwendungsgebiet der vorliegenden Erfindung und beschreiben zudem andere Eigenschaften.

In der WO 94/16020 sind bioabbaubare Blends aus zwei Polymeren beschrieben, von denen jedes für sich bereits bioabbaubar sein soll. Als erstes Polymer werden u.a. auch Polyamid (PA), als zweite Komponente u.a. PVAL, Polylactid und andere aliphatische Polyester genannt. Optional soll zusätzlich ein Polysaccharid beigemischt sein. In den Beispielen werden vorwiegend Blends aus EVOH und PVAL aufgeführt. Werden Folien aus den Blends mit heißem Wasser behandelt, kommt es zur Extraktion des PVAL aus der Matrix. Die genannten Blends sind somit ungeeignet, um daraus Folien zur Umhüllung feuchter Lebensmittel herzustellen.

In der WO 94/03544 sind Blends aus einem wasserlöslichen Polymer und einem wasserunlöslichen Matrixpolymer zur Herstellung medizinischer Artikel offenbart. Das wasserlösliche Polymer ist ein Polyethylenglykol, ein Poly(ethyloxazolin), ein Polyvinylalkohol, ein Polyacrylamid, ein Polyvinylpyrrolidon oder eine Polyacrylsäure. Das Matrixpolymer wiederum ist ein Ethylen/vinylacetat-Copolymer (EVA), ein Polyolefin, ein Polyvinylchlorid (PVC), ein Polystyrol, ein Polystyrol/Butadien-Copolymer, ein Polycarbonat, Polyacrylat, ein Polyamid oder ein Copolymer davon, ein Polyurethan, ein Polyester oder ein Copolymer davon. Die Oberfläche der Arktikel ist hydrophil und proteinverträglich, was insbesondere die Absorption von Blut-Protein vermindert.

In der JP-A 62-132952 sind thermoplastische Blends aus 20 bis 80 Gew.-% eines Polyamids und 80 bis 20 Gew.-% PVAL offenbart sowie daraus hergestellte Artikel, beispielsweise Folien und Rohre, die sich durch einen verringerten elektrischen Oberflächenwiderstand und dadurch verbesserte antistatische Eigenschaften auszeichnen.

Gegenstand der US-A 4 611 019 ist ein Blend aus thermoplastischem Polyvinylalkohol-Homopolymer mit einem Verseifungsgrad von mehr als 95 %, einem Weichmacher und einem kleinen Anteil (0,5 bis 4,5 Gew.-%, bezogen auf PVAL) an Polyamid oder Polyester. Gegenüber reinem PVAL hat das Blend den Vorteil einer verbesserten Sauerstoffbarriere insbesondere bei hohen Feuchtwerten (d.h. bei mehr als 75 % relativer Feuchte). Diese Feststellung steht der erfindungsgemäßen Aufgabe, in der ja Permeation von (Rauch-)Gasen gewünscht ist, direkt entgegen.

Gegenstand der WO 02/078455 A1 ist eine Polymerfolie zur Verpackung von Nahrungsmitteln offenbart. Die Folie umfaßt eine Polyamid-Matrix und eine disperse Phase aus einer für Wasserdampf und Rauchbestandteile permeablen Komponente. Die disperse Phase bildet Domänen mit einer linearen Ausdehnung von 0,1 bis 3 µm senkrecht zur Ebene der Folie. Konkret offenbart ist eine Polymerhülle aus 80 Gew.-% Polyamid-6, 15 Gew.-% Polyvinylalkohol und 5 Gew.-% Glycerin. Für diese Hülle ist eine Wasserdampfdurchlässigkeit von 509 g/m² d angegeben, gemessen bei 65 % relativer Feuchte und 30 °C.

Zusammenfassend kann gesagt werden, daß thermoplastische Blends aus Polyamiden und wasserlöslichen Polymeren zwar bereits bekannt sind, bislang aber keinerlei Hinweise auf hohe Wasserdampf- und Rauchdurchlässigkeit solcher Blends oder auf deren Eignung zur Herstellung von Nahrungsmittelhüllen existieren.

Gegenstand der vorliegenden Erfindung ist somit eine rauchdurchlässige, feuchtigkeitsbeständige, schlauchförmige, biaxial orientierte Nahrungsmittelhülle, die dadurch gekennzeichnet ist, daß sie ein Gemisch aus mindestens einem aliphatischen (Co-)Polyamid, mindestens einem wasserlöslichen, synthetischen organischen Polymer, das eine Löslichkeit in 80 °C warmem Wasser von mindestens 20 g/l aufweist, und einem Plastifizierungshilfsmittel umfaßt, wobei das Plastifizierungshilfsmittel Glycerin, Mono- und Diglykol, Trimethylolpropan, ein Mono, Di- oder Triester von Glycerin mit Carbonsäuren, Formamid, Acetamid, N,N-Dimethyl-formamid oder N,N-Dimethyl-acetamid umfaßt, und das wasserlösliche synthetische Polymer mit einem oder mehreren Plastifizierungsmitteln vorgemischtwird, und daß die Wasserdampfdurchlässigkeit der Hülle 40 bis 200 g/m² · d beträgt, gemessen nach DIN 53 122 bei einer einseitigen Beaufschlagung mit Luft von 85 % relativer Feuchte und bei 23 °C. Gegebenenfalls enthält das Gemisch zusätzlich einen oder mehrere weitere organische und/oder anorganische Stoffe, die die Eigenschaften der Hülle modifizieren.

Der Begriff "(Co-)Polyamid" wird im Zusammenhang mit der vorliegenden Erfindung als Kurzbezeichnung für "Polyamid oder Copolyamid" verwendet. "(Meth)acrylsäure" steht für "Acrylsäure und/oder Methacrylsäure". Entsprechendes gilt für "(Meth)acrylamid" und ähnliche Bezeichnungen.

Von den aliphatischen (Co-)Polyamiden sind Poly(ε-caprolactam), auch bezeichnet als PA 6, das Polyamid aus Hexamethylendiamin und Adipinsäure (= Poly(hexamethylenadipamid) oder PA 66), das Copolyamid aus ε-caprolactam und ω-Laurinlactam (= PA 6/12) sowie Polyamid 6/66 bevorzugt. Zu den Copolyamiden werden auch heterofunktionelle Polyamide, insbesondere Polyetheramide, Polyesteramide, Polyetheresteramide und Polyamidurethane gerechnet. Unter diesen Polymeren sind solche mit blockartiger Verteilung der verschiedenen Funktionalitäten, d.h. Blockcopolymere, bevorzugt. Besonders bevorzugte Blockcopolymere sind Poly(ether-block-amide).

Der Anteil des aliphatischen (Co-)Polyamids beträgt allgemein 40 bis 94 Gew.-%, bevorzugt 55 bis 90 Gew.-%, besonders bevorzugt 60 bis 85 Gew.-%, jeweils bezogen auf das Gesamtgewicht des Gemisches.

Das wasserlösliche, thermoplastifizierbare, synthetische, organische Polymer ist vorzugsweise
a) ein Polyvinylalkohol (PVAL), wie er erhältlich ist durch teilweise oder vollständige Verseifung von Polyvinylacetat (PVAC), oder ein Copolymer mit Vinylalkohol-Einheiten (beispielsweise ein Copolymer mit Einheiten aus Vinylalkohol und Propen-1-ol),
b) ein Polyalkylenglykol, insbesondere Polyethylenglykol, Polypropylenglykol oder ein entsprechendes Copolymer mit Alkylenglykol-Einheiten, insbesondere Ethylenglykol- und/oder Propylenglykol-Einheiten, und Einheiten von anderen Monomeren,
c) ein Polyvinylpyrrolidon oder ein wasserlösliches Copolymer mit Vinylpyrrolidon-Einheiten und Einheiten aus mindestens einem α,β-olefinisch ungesättigtem Monomer,
d) ein Polymerisat von N-Vinylalkylamiden, z.B. Poly(N-vinylformamid), Poly-(N-vinylacetamid) oder
e) ein (Co-)Polymer aus bzw. mit Einheiten von α,β-ungesättigten Carbonsäuren oder α,β-ungesättigten Carbonsäureamiden, insbesondere mit Einheiten von (Meth)acrylsäure und/oder (Meth)acrylamid.

Von diesen Gruppen ist a) besonders bevorzugt. Ganz besonders bevorzugt ist ein PVAL mit einem mittleren Molekulargewicht M_{W} von 10.000 bis 50.000 und einem Verseifungsgrad der Acetatgruppen im Bereich 75 bis 98%.

Der Anteil des synthetischen wasserlöslichen Polymers beträgt allgemein 3 bis 50 Gew.-%, bevorzugt 10 bis 40 Gew.-%, besonders bevorzugt 15 bis 30 Gew.-%, bezogen auf das Gesamtgewicht des thermoplastischen Gemisches.

Gegebenenfalls enthält das thermoplastische Gemisch Additive, die die Eigenschaften der Hülle beeinflussen. Dadurch lassen sich Eigenschaften, wie Optik, Haptik, Feuchtespeichervermögen oder Abschälverhalten nach Wunsch oder Bedarf exakt einstellen. In Frage kommen dafür insbesondere Polysaccharide, anorganische Füllstoffe und Farbpigmente.

Bevorzugte organische Additive sind Polysaccharide. Dazu gehören Stärke (nativ oder destrukturiert, im letzteren Fall mit Weichmacherzusätzen, wie Glycerin), Cellulose (in Form von Pulvern oder Kurzfasern, wobei die Kurzfasern nativen Ursprungs oder durch Viskose-Verspinnung gewonnene Fasern sein können), Exo-Polysaccharide (wie Carrageenan, Locust Bean Gum oder Guar Gum) und Polysaccharid-Derivate (wie vernetzte Stärke, Stärkeester, Celluloseester, Celluloseether oder Carboxyalkylcelluloseether).

Unter den anorganischen Füllstoffen kommen insbesondere Quarzpulver, Titandioxid, Calciumcarbonat, Talkum, Glimmer und andere Alumosilikate, Glasstapelfasern, sonstige Mineralfasern oder Mikroglaskugeln in Frage. Farbpigmente können je nach gewünschter Farbgebung organischer und/oder anorganischer Natur sein.

Andere zweckmäßig vorhandene Komponenten sind beispielsweise Plastifizierungshilfsmittel, wie Glycerin, Mono- und Diglykole, Trimethylolpropan, Mono-, Di- und Triester von Glycerin mit Carbonsäuren (speziell linearen (C₃-C₁₂)-Alkansäuren), Formamid, Acetamid, N,N-Dimethylformamid, N,N-Dimethylacetamid, außerdem Stabilisatoren und Verarbeitungshilfsmittel.

Der Anteil an gegebenenfalls vorhandenen sonstigen Stoffen beträgt allgemein 0 bis 25 Gew.-%, bevorzugt 1 bis 20 Gew.-%, besonders bevorzugt 2 bis 8 Gew.-%, bezogen auf das Gesamtgewicht des thermoplastischen Gemisches. Polysaccharide sollten dabei in einem Anteil von maximal 5 Gew.-% enthalten sein, um die Wasserdampfdurchlässigkeit innerhalb der genannten Grenzen zu halten.

Gegenstand der Erfindung ist auch ein Verfahren zur Herstellung der erfindungsgemäßen Nahrungsmittelhülle. Die Herstellung erfolgt allgemein durch Extrusionsverfahren, die dem Fachmann an sich bekannt sind.

Das zu extrudierende Gemisch wird am einfachsten durch mechanisches Mischen der granulären Komponenten und anschließendes gemeinsames Aufschmelzen im Extruder erzeugt.

Das wasserlösliche synthetische Polymer wird zunächst mit einem oder mehreren Plastifizierungsmittel(n) vorgemischt. Die Herstellung dieser Vormischung kann beispielsweise in einem beheizbaren Kessel mit schnellaufendem wandgängigem Rührer erfolgen.

Typischerweise werden 100 Teile wasserlösliches Polymer (wie PVAL und/oder PEG) in Pulverform vorgelegt und mit 5 bis 15 Teilen Weichmacher (wie Glycerin oder Ethylenglykol) und gegebenenfalls bis zu 15 Teilen Wasser vermischt. Unter anhaltendem Rühren wird das Gemisch auf 100 bis 120°C erwärmt und weitergerührt, bis eine gleichmäßige Verteilung des Weichmachers erreicht ist. Nach dem Abkühlen sollte ein gleichmäßig feinkörniges, rieselfähiges Pulver vorliegen.

Dieses Pulver kann direkt mit den restlichen Komponenten gemischt und extrudiert oder auch vorab zu Granulat umgearbeitet werden. Ein Vorteil der Granulatform ist die bessere Mischbarkeit mit den meist ebenfalls in granulärer Form vorliegenden weiteren Komponenten sowie die leichtere Eindosierung in den Extruder. Zur Granulatherstellung eignen sich handelsübliche Zweiwellenkneter mit Lochdüse, Luftkühlstrecke und Strangabschneider.

Nach dem Aufschmelzen im Extruder wird das Gemisch homogenisiert und gemeinsam plastifiziert. Die Schmelze wird dann durch eine Ringdüse extrudiert. Dabei bildet sich ein Primärschlauch mit einer relativ hohen Wandstärke. Der Primärschlauch wird anschließend rasch abgekühlt, um den amorphen Zustand der Polymere einzufrieren. Anschließend wird er dann wieder auf die zum Verstrecken erforderliche Temperatur erwärmt, beispielsweise auf etwa 80 °C. Verstreckt wird der Schlauch dann in Längs- und in Querrichtung, was vorzugsweise in einem Arbeitsgang durchgeführt wird. Die Längsverstreckung wird üblicherweise mit Hilfe von 2 Quetschwalzenpaaren mit steigender Antriebsgeschwindigkeit vorgenommen; die Querverstreckung erfolgt durch einen von innen auf die Wände des Schlauches wirkenden Gasdruck. Das Flächenstreckverhältnis (das ist das Produkt aus Längs- und Querstreckverhältnis) beträgt allgemein etwa 6 bis 18, bevorzugt etwa 8 bis 11.

Nach dem Verstrecken wird der Schlauch vorzugsweise noch thermofixiert. Damit lassen sich die gewünschten Schrumpfeigenschaften exakt einstellen. Schließlich wird der Schlauch abgekühlt, flachgelegt und aufgewickelt.
In einer besonderen Ausführungsform wird der Schlauch anschließend verkranzt.

Dazu wird der Schlauch aufgeblasen, einseitig erwärmt (in der Regel berührungslos durch Strahlungshitze) und dann in erwärmtem Zustand gebogen, so daß er eine ring- oder spiralförmige Form annimmt. Verfahren und Vorrichtungen zum Verkranzen sind dem Fachmann allgemein bekannt und auch in der Patentliteratur beschrieben.

Die nachfolgenden Beispiele dienen der Erläuterung, ohne jedoch limitierenden Charakter für den Umfang der Erfindung zu haben. Prozente sind Gewichtsprozente, soweit nicht anders angegeben oder aus dem Zusammenhang ersichtlich.

Folgende Ausgangsmaterialien wurden eingesetzt:

**Aliphatisches Polyamid (PA):**

| | |
|---|---|
| PA1: | Polyamid 6/66 (Gewichtsverhältnis 85 : 15 Gewichtsteile) mit einer relativen Viskosität von 4 (gemessen in 96%iger Schwefelsäure), ®Ultramid C4 der BASF AG |
| PA2: | Polyamid 6/12 (Gewichtsverhältnis 80 : 20 Gewichtsteile) mit einem Schmelzvolumenindexvon 50 ml/10 min (gemessen bei 275°C unter 5kg Last), ®Grilon CR9 HV der Ems-Chemie AG |

**Wasserlösliches synthetisches Polymer (WP)**

| | |
|---|---|
| WP1: | Polvinylalkohol (PVAL) mit einem Molekulargewichtsmittel M_{W} von 26.000 und einem Verseifungsgrad von 88% (®Mowiol 26-88 der Clariant Deutschland GmbH) |
| WP2: | Polyethylenglykol (PEG) mit einem mittleren Polymerisationsgrad von 300 (®Genapol PEG 300 der Hoechst AG) |

**Plastifizierungshilfsmittel (PL)**

| | |
|---|---|
| Glycerin | 96%ig, Reinheit gemäß DAB (Deutsches Arzneimittelbuch) Sonstige Komponenten |
| Stärke: | feinkörnige Maisstärke der Fa. Cerestar |
| Füllstoff-Batch 1: | Masterbatch aus Calciumcarbonat und Polyamid 6, Gewichtsverhältnis 50 : 50 (HT-MAB-PA9098 der Fa. Treffert) |
| Füllstoff-Batch 2: | Masterbatch aus Quarzmehl und Polyamid 6, Gewichtsverhältsnis 10 : 90 (®Grilon XE 3690 der Ems-Chemie AG) |

Bei den Beispielen werden die nachfolgend erläuterten Parameter verwendet.
- phr =: "parts per hundred resin added" (Gewichtsprozent bezogen auf die vorgelegte Menge an Polymer)

Meßgrößen, über welche die Hüllen charakterisiert wurden:

| | | |
|---|---|---|
| a) | σ_{R} | = Reißspannung [N/mm²] |
| b) | ε_{R} | = Reißdehnung [%] |
| c) | σ₅ | = Spannung bei 5% Dehnung [N/mm²] |
| d) | σ₁₅ | = Spannung bei 15% Dehnung [N/mm²] |

Die Parameter (a) bis (d) wurden gemäß DIN 53 455 mit einem Vorschub von 50 mm/min und einer Einspannlänge von 50 mm bestimmt. Vermessen wurden Probeausschnitte mit einer Breite von 15 mm, die zuvor 30 min lang in kaltes Wasser eingelegt worden waren.

| | | |
|---|---|---|
| e) WTR | = | "Water Vapour Transmission Rate" (Wasserdampfdurchlässigkeit), gemessen nach DIN 53122 bei einer einseitigen Beaufschlagung von Proben mit Luft von 85% relativer Feuchte und bei 23°C [g/m². d] |
| f) Thermoschrumpf | = | relative Dimensionsverringerung eines Ausschnitts der der Folie, nachdem dieser 15 min lang in 80°C warmem Wasser gelagert worden war [%] |
| g) Extraktionsverlust | = | Gewichtsabnahme einer Probe, nachdem diese 1 h in 80°C warmem Wasser gelagert und anschließend im Vakuum getrocknet worden war [Gew.-%] |

### Beispiel 1

### Herstellung eines Compounds aus wasserlöslichen Polymeren und Plastifizierhilfsmittel

In einem Rührkessel mit Mantel-Flüssigkeitsheizung und wandgängigem Rührer wurden bei Raumtemperatur 100 phr WP1 vorgelegt. Unter Rühren bei ca. 1000/min wurden zunächst 20 phr WP2 und anschl. 10 phr Glycerin sowie 3 phr Wasser zugesetzt. Der Kesselinhalt wurde auf 100 bis 110°C erwärmt, 15min bei dieser Temperatur gerührt und unter weiterem Rühren wieder auf 30 bis 40°C abgekühlt. Das resultierende Pulver wurde per Dosiervorrichtung in einen beheizten Zweiwellenkneter (Zylinderdurchmesser 25mm, L/D-Verhältnis 36) mit Einloch-Austrittsdüse dosiert, so daß sich ein Massestrom von 8 kg/h ergab. Die Schneckendrehzahl betrug 250/min, die Heizungen waren auf Temperaturen von 120°C (Aufgabestelle) stromabwärts bis auf 180°C steigend (Düse) eingestellt. Der austretende wasserklare Strang wurde auf einer Luftkühlstrecke abgekühlt und anschließend mittels Stranghäcksler zu Granulatkörnern zerteilt. Das so erhaltene Compound wird im Folgenden mit WP3 abgekürzt.

### Beispiele 2 bis 6 und Vergleichsbeispiele V1 und V2

### Herstellung biaxial orientierter Schlauchhüllen

Die in Tabelle 1 für jedes Beispiel genannten Komponenten wurden bei Raumtemperatur mechanisch durchmischt. Jedes Gemisch wurde dann in einem Einschneckenextruder bei 220 °C zu einer homogenen Schmelze plastifiziert und bei 190°C durch eine Ringdüse zu einem Primärschlauch extrudiert. Der Schlauch wurde schnell abgekühlt, dann auf die zum Verstrecken erforderliche Mindesttemperatur (etwa 70 °C) erwärmt, mit Hilfe von innen wirkender Preßluft biaxial verstreckt und anschließend in einer weiteren Heizzone thermofixiert. Durch die Thermofixierung reduzierte sich die Querverstreckung um etwa 10 %. Die fertigen Hüllen wurden flachgelegt und zu Rollen aufgewickelt.

Die Streckverhältnisse der fertigen Nahrungsmittelhüllen sowie deren Wandstärken sind ebenfalls aus Tabelle 1 ersichtlich. Die Durchmesser der Hüllen wurden nicht aufgelistet; sie lassen sich gegebenenfalls einfach errechnen, indem man die angegebenen Primärschlauch-Durchmesser mit den Gesamt-Querstreckverhältnissen multipliziert.

**Tabelle 1: Herstelldaten für Hüllenbeispiele**

| Beispiel | aliphatisches Polyamid (PA) | wasserlösliches Polymer (WP) | Plastifizierhilfsmittel (PL) | weitere Komponente | Primärschlauch-∅ [mm] | Gesamtquerreckgrad | Gesamtlängsreckgrad | Wandstärke des Endschlauches [µm] |
|---|---|---|---|---|---|---|---|---|
| 2 | PA1 68 Gew.-% | WP3 30 Gew.-% | --- | Füllstoff-Batch 1 2 Gew.-% | 14 | 3,0 | 2,75 | 25 |
| 3 | PA1 81 Gew.-% | WP2 15 Gew.-% | Glycerin 2 Gew.-% | Füllstoff-Batch 1 2 Gew.-% | 14 | 3,1 | 2,88 | 25 |
| 4 | PA2 68 Gew.-% | WP3 30 Gew.-% | --- | Füllstoff-Batch 1 2 Gew.-% | 16 | 3,1 | 2,88 | 25 |
| 5 | PA1 69 Gew.-% | WP3 25 Gew.-% | Glycerin 2 Gew.-% | Stärke 4,0 Gew.-% | 16 | 3,2 | 2,75 | 35 |
| 6 | PA1 67,5 Gew.-% | WP3 20 Gew.-% | Glycerin 2,5 Gew.-% | Stärke Füllstoffbatch 2 je 5 Gew.-% | 14 | 3,2 | 2,75 | 50 |
| V1 | PA1 98 Gew.-% | --- | --- | Füllstoff-Batch 1 2 Gew.-% | 14 | 3,0 | 2,75 | 25 |
| V2 | PA1 93,5 Gew.-% | --- | Glycerin 2 Gew.-% | Stärke 4,5 Gew.-% | 16 | 3,1 | 2,75 | 35 |

**Tabelle 2: Prüfwerte der Hüllenbeispiele**

| Beispiel | σ_{R} längs/quer | ε_{R} [%] längs/quer | σ₅ [N/mm²] längs/quer | σ₁₅ [N/mm²] längs/quer | Thermoschrumpf [%] längs / quer | Extraktionsverlust [Gew.-%] | WTR [g/m² · d] |
|---|---|---|---|---|---|---|---|
| 2 | 45 / 52 | 95 / 70 | 4,5 / 4,0 | 13 / 12,5 | 18 / 17 | 2,9 | 110 |
| 3 | 82 / 75 | 100 / 80 | 8,5 / 6,2 | 17,5 / 16 | 20 / 18 | 1,8 | 72 |
| 4 | 48 / 42 | 90 / 65 | 5,2 / 4,8 | 14,5 / 13 | 18 / 16 | 2,8 | 93 |
| 5 | 71 / 40 | 130 / 40 | 5,9 / 5 | 12 / 15 | 10 / 8 | 4,3 | 86 |
| 6 | 56 / 65 | 160 / 100 | 6,3 / 6,1 | 13 / 16 | 6 / 5 | 4,4 | 81 |
| V1 | 88 / 81 | 110 / 85 | 8, 8 / 7,1 | 18 / 17,5 | 19 / 18 | 0,2 | 26 |
| V2 | 83 /54 | 120 / 45 | 7,5 / 6,8 | 14 / 14 | 9 / 8 | 1,7 | 24 |

Die Werte für den Extraktionsverlust belegen, daß unter Einwirkung von heißem Wasser nur das Plastifizierungshilfsmittel, nicht jedoch das wasserlösliche synthetische Polymere aus der Hülle herausgelöst wurde.

Die Werte für den Wasserdampfdurchgang (WTR) sind ein Maß für die Rauchdurchlässigkeit der Muster. Bei den Beispielen 2 bis 6 liegen sie um ein Vielfaches höher als bei den Vergleichsbeispielen. Damit zeigt sich deutlich die Überlegenheit der erfindungsgemäßen Hülle gegenüber dem Stand der Technik.

Hüllenabschnitte wurden bei konstantem Fülldruck mitfeinkörnigem Brühwurstbrät gefüllt und an den Enden mit Metallclips verschlossen. Dann wurden die Würste in einem Brühschrank mit Raucherzeuger 30 min lang mit rauchgesättigtem Wasserdampf bei 75 °C behandelt, anschließend 60 min. lang mit Wasserdampf ohne Rauch bei 80 °C gegart. Die Würste wurden an der Luft auf Raumtemperatur abgekühlt und dann in einem Kühlraum bei etwa 6 °C gelagert.

**Tabelle 3: Ergebnisse des Wurst-Fülltests**

| Beispiel | Prallheit¹⁾ | Abringelverhalten²⁾ | Rauchfarbe³⁾ | Rauchgeschmack⁴⁾ |
|---|---|---|---|---|
| 2 | 1 | 2 | 7 | 8 |
| 3 | 2 | 2 | 5 | 6 |
| 4 | 1 | 2 | 6 | 7 |
| 5 | 2 | 1 | 8 | 8 |
| 6 | 2 | 1 | 8 | 9 |
| V1 | 1 | 3 | 0 | 1 |
| V2 | 3 | 1 | 2 | 3 |

Tabelle 3 zeigt, daß das Wurstbrät in den erfindungsgemäßen Hüllen nach dem Räuchern deutlich tiefer gefärbt ist und einen intensiveren Räuchergeschmack aufweist, als bei den Vergleichsbeispielen bzw. dem Stand der Technik.

Erläuterungen zu den Prüfparametern in Tabelle 3:
1) subjektives Urteil über Faltenfreiheit und Konsistenz der Würste (1 = einwandfrei, 3 = deutliche Faltenbildung)
2) beurteilt wurde, inwieweit sich die Hülle nach dem Einschneiden richtungsneutral abringeln ließ (1 = in allen Richtungen gleichförmig abringelbar; 5 = nur Abziehen in Längsrichtung möglich)
3) Maß für die Braunfärbung der Brätoberfläche nach dem Abschälen der Hülle (10 = sehr dunkle Farbe, wie bei Würsten in Cellulosehülle; 0 = kein Farbunterschied zum Innern des Bräts)
4) subjektives Urteil aus Verkostungstest durch eine Reihe von 4 Probanden (10 = sehr starker Rauchgeschmack, wie bei Würsten in Cellulosehülle; 0 = kein Rauchgeschmack, wie bei ungeräucherter Brühwurst)

## Patentansprüche

1. Rauchdurchlässige, feuchtigkeitsbeständlge, schlauchförmige, biaxial orientierte Nahrungsmittelhülle, **dadurch gekennzeichnet, daß** sie ein Gemisch aus mindestens einem aliphatischen (Co-)Polyamid, mindestens einem wasserlöslichen synthetischen Polymer, das eine Löslichkeit in 80° C warmem Wasser von mindestens 20g/l aufweist, und einem Plastifizierungshilfsmittel umfaßt, wobei das Plastifizierungshilfsmittel Glycerin, Mono- und Diglykol, Trimethylolpropan, ein Mono-, Di- oder Triester von Glycerin mit Carbonsäuren, Formamid, Acetamid, N,N-Dimethyl-formamid oder N,N-Dimethyl-acetamid umfaßt, und das wasserlösliche synthetische Polymer mit einem oder mehreren Plastifizierungsmitteln vorgemischt wird, und daß die Wasserdampfdurchlässigkeit der Hülle 40 bis 200 g/m² d beträgt, gemessen nach DIN 53 122 bei einer einseitigen Beaufschlagung mit Luft von 85 % relativer Feuchte und bei 23 °C.

2. Nahrungsmittelhülle gemäß Anspruch 1, **dadurch gekennzeichnet, daß** das aliphatische (Co-)Polyamid Poly(ε-caprolactam), Poly(hexamethylen-adipamid), das Copolyamid aus ε-Caprolactam und ω-Laurinlactam (= PA 6/12). Polyamid 6/66, ein Polyetheramid, Polyesteramid, Polyetheresteramid, Polyamidurethan ist.

3. Nahrungsmittelhülle gemäß Anspruch 1 oder 2, **dadurch gekennzeichnet, daß** der Anteil des aliphatischen (Co-)Polyamids 50 bis 94 Gew.-%, bevorzugt 55 bis 90 Gew.-%, besonders bevorzugt 60 bis 85 Gew.-%, beträgt, jeweils bezogen auf das Gesamtgewicht des Gemisches.

4. Nahrungsmittelhülle gemäß einem oder mehreren der Ansprüche 1 bis 3, **dadurch gekennzeichnet, daß** das wasserlösliche, synthetische, organische Polymere ein teilweise oder vollständig versteifter Polyvinylalkohol, ein Copolymer mit Vinylalkohol-Einheiten, ein Polyalkylenglykol, ein Copolymer mit Alkylenglykol-Einheiten, ein Polyvinylpyrrolidon, ein Copolymer mit Vinylpyrrolidon-Einheiten und Einheiten aus mindestens einem α,β-olefinisch ungesättigtem Monomer, ein Homopolymer aus oder ein Copolymer mit Einheiten von N-Vinylalkylamiden und/oder ein (Co-)polymer aus bzw. mit Einheiten von α,β-ungesättigten Carbonsäuren oder α,β-ungesättigten Carbonsäureamiden ist.

5. Nahrungsmittelhülle gemäß einem oder mehreren der Ansprüche 1 bis 4, **dadurch gekennzeichnet, daß** der Anteil des mindestens einen synthetischen wasserlöslichen Polymers 3 bis 50 Gew.-%, bevorzugt 10 bis 40 Gew.-%, besonders bevorzugt 15 bis 30 Gew.-%, beträgt, bezogen auf das Gesamtgewicht des thermoplastischen Gemisches.

6. Nahrungsmittelhülle gemäß einem oder mehreren der Ansprüche 1 bis 5, **dadurch gekennzeichnet, daß** das Gemisch mindestens ein Additiv enthält, das die Optik, Haptik, das Feuchtespeichervermögen oder das Abschälverhalten beeinflußt.

7. Nahrungsmittelhülle gemäß Anspruch 6, **dadurch gekennzeichnet, daß** das mindestens eine Additiv ein Polysaccharid, ein anorganischer Füllstoff oder ein Farbpigment ist,

8. Nahrungsmittelhülle gemäß Anspruch 7, **dadurch gekennzeichnet, daß** der anorganische Füllstoff aus Quarzpulver, Titandioxid, Calciumcarbonat, Talkum, Glimmer oder einem anderen Alumosilikat, aus Glasstapelfasern, sonstigen Mineralfasern oder Mikroglaskugeln besteht.

9. Nahrungsmittelhülle gemaß Anspruch 6 oder 7, **dadurch gekennzeichnet, daß** der Anteil des mindestens einen Additivs 0 bis 25 Gew.-%, bevorzugt 1 bis 20 Gew.-%, besonders bevorzugt 2 bis 8 Gew.-%, beträgt, jeweils bezogen auf das Gesamtgewicht des Gemisches.

10. NahrungsmittelhüllegemäßAnspruch 7, **dadurch gekennzeichnet**, daßdas Polysaccharid Stärke, Cellulose, ein exo-Polysaccharid oder ein Polysaccharid-Derivat ist,

11. Nahrungsmittelhülle gemäß einem oder mehreren der Ansprüche 1 bis 10. dadurch gekenntzeichnet, daß sie schlauchförmig und nahtlos ist.

12. Nahrungsmittelhülle gemäß Anspruch 11, **dadurch gekennzeichnet, daß** sie kranzförmig gebogen ist,

13. Verfahren zur Herstellung einer Nahrungsmittelhülle gemäß einem oder mehreren der Ansprüche 1 bis 12, **dadurch gekennzeichnet, daß** ein Gemisch, das mindestens ein aliphatisches (Co-) Polyamid und mindestens ein wasserlösliches synthetisches Polymer umfaßt, thermoplastifiziert und durch eine Ringdüse zu einem Primärschlauch extrudiert wird und daß der Primärschlauch abgekühlt, anschließend auf eine zum Verstrecken erforderliche Temperatur aufgeheizt und dann biaxial zu der Nahrungsmittelhülle verstreckt wird.

14. Verfahren gemäß Anspruch 13, **dadurch gekennzeichnet, daß** die Hüllen nach dem Verstrecken thermofixiert wird.

15. Verfahren gemäß Anspruch 13, **dadurch gekennzeichnet, daß** die schlauchförmige Hülle anschließend verkranzt wird, so daß sie eine ring- oder spiralförmige Form annimmt,

16. Verwendung einer Nahrungsmittelhülle gemäß einem oder mehreren der Ansprüche 1 bis 12 als künstliche Wursthülle, bevorzugt als Hülle für räucherbare Brühwurst.

## Claims

1. Smoke-permeable, moisture-resistant, tubular, biaxially oriented food casing, **characterized in that** it comprises a mixture of at least one aliphatic (co-)polyamide, at least one water-soluble synthetic polymer which has a solubility in water at 80 °C of at least 20 g/l, and a plasticizing aid, wherein the plasticizing aid comprisesglycerol,mono-and diglycol, trimethylolpropane, a mono-, di- or triester of glycerol with carboxylic acids, formamide, acetamide, N,N-dimethylformamide or N,N-dimethylacetamide, and the water-soluble synthetic polymer is premixed with one or more plasticizing agents, and **in that** the water vapor transmission rate of the casing is 40 to 200 g/m² · d, measured to DIN 53 122 with single-sided bombardment with air of 85 % relative humidity and at 23 °C.

2. Food casing according to Claim 1, **characterized in that** the aliphatic (co-)polyamide is poly(ε-caprolactam), poly(hexamethylene adipamide), the copolyamide is of ε-caprolactam and ω-laurolactam (= nylon 6/12), nylon 6/66, a polyetheramide, polyesteramide, polyetheresteramide, polyamido-urethane.

3. Food casing according to Claim 1 or 2, **characterized in that** the content of the aliphatic (co-)polyamide is 50 to 94% by weight, preferably 55 to 90% by weight, particularly preferably 60 to 85% by weight, in each case based on the total weight of the mixture.

4. Food casing according to one or more of Claims 1 to 3, **characterized in that** the water-soluble, synthetic, organic polymer is preferably a partially or completely saponified poly(vinyl alcohol), a copolymer having vinyl alcohol units, a poly(alkylene glycol), a copolymer having alkylene glycol units, a polyvinylpyrrolidone, a copolymer having vinylpyrrolidone units and units of at least one α,β-olefinically unsaturated monomer, a homopolymer of, or a copolymer having, units of N-vinylalkylamides and/or a (co-)polymer of or having units of α,β-unsaturated carboxylic acids or α,β-unsaturated carboxamides.

5. Food casing according to one or more of Claims 1 to 4, **characterized in that** the content of the at least one synthetic, water-soluble polymer is 3 to 50 % by weight, preferably 10 to 40 % by weight, particularly preferably 15 to 30 % by weight, based on the total weight of the thermoplastic mixture.

6. Food casing according to one or more of Claims 1 to 5, **characterized in that** the mixture comprises at least one additive which influences the optics, haptics, the moisture storage capacity or the peeling behavior.

7. Food casing according to Claim 6, **characterized in that** the at least one additive is a polysaccharide, an inorganic filler or a color pigment.

8. Food casing according to Claim 7, **characterized in that** the inorganic filler consists of quartz powder, titanium dioxide, calcium carbonate, talc, mica or another aluminosilicate, consists of glass staple fibers, other mineral fibers or glass microbeads.

9. Food casing according to Claim 6 or 7, **characterized in that** the content of the at least one additive is 0 to 25 % by weight, preferably 1 to 20 % by weight, particularly preferably 2 to 8 % by weight, in each case based on the total weight of the mixture.

10. Food casing according to Claim 7, **characterized in that** the polysaccharide is starch, cellulose, an exo-polysaccharide or a polysaccharide derivative.

11. Food casing according to one or more of Claims 1 to 10, **characterized in that** it is tubular and seamless.

12. Food casing according to Claim 11, **characterized in that** it is bent into a ring shape.

13. Method for producing a food casing according to one or more of Claims 1 to 12, **characterized in that** a mixture which comprises at least one aliphatic (co-) polyamide and at least one water-soluble synthetic polymer is heat plasticized and extruded through a ring die to form a primary tube and **in that** the primary tube is cooled, then heated to a temperature required for stretching and then biaxially stretched to form the food casing.

14. Method according to Claim 13, **characterized in that** the casing after stretching is heat set.

15. Method according to Claim 13, **characterized in that** the tubular casing is then formed into a ring, so that it takes on a ring or spiral shape.

16. Use of a food casing according to one or more of Claims 1 to 12 as artificial sausage casing, preferably as casing for smokeable scalded-emulsion sausage.

## Revendications

1. Enveloppe de produit alimentaire perméable à la fumée, résistante à l'humidité, en forme de boyau et à orientation biaxiale, **caractérisée en ce qu'**elle comprend un mélange constitué d'au moins un (co-)polyamide aliphatique, d'au moins un polymère synthétique soluble dans l'eau, qui présente une solubilité dans de l'eau chaude à 80 °C d'au moins 20 g/l, et d'un agent plastifiant, l'agent plastifiant comprenant de la glycérine, du mono- et diglycol, du triméthylolpropane, un mono-, di- ou triester de glycérine avec des acides carboxyliques, du formamide, de l'acétamide, du N,N-diméthyl-formamide ou du N,N-diméthyl-acétamide et le polymère synthétique soluble dans l'eau étant prémélangé avec un ou plusieurs agents plastifiants, et **en ce que** la perméabilité à la vapeur d'eau de l'enveloppe est égale à 40 à 200 g/m² d, mesurée selon DIN 53 122 pour une exposition unilatérale à de l'air ayant une humidité relative de 85 % et à 23 °C.

2. Enveloppe de produit alimentaire selon la revendication 1, **caractérisée en ce que** le (co-)polyamide aliphatique est du poly(ε-caprolactam), du poly(hexaméthylène-adipamide), du copolyamide de ε-caprolactam et de ω-laurinlactam (= PA 6/12), du polyamide 6/66, un polyétheramide, un polyesteramide, un polyétheresteramide, du polyamide-uréthane.

3. Enveloppe de produit alimentaire selon la revendication 1 ou 2, **caractérisée en ce que** la proportion de (co-)polyamide aliphatique est comprise entre 50 et 94 % en poids, de préférence entre 55 et 90 % en poids, particulièrement de préférence entre 60 et 85 % en poids, à chaque fois par rapport au poids total du mélange.

4. Enveloppe de produit alimentaire selon une ou plusieurs des revendications 1 à 3, **caractérisée en ce que** le polymère soluble dans l'eau, synthétique et organique est un alcool polyvinylique partiellement ou entièrement saponifié, un copolymère avec des unités d'alcool vinylique, un polyalkylène-glycol, un copolymère avec des unités d'alkylène-glycol, une polyvinylpyrrolidone, un copolymère avec des unités de vinylpyrrolidone et des unités d'au moins un monomère α,β-oléfinique insaturé, un homopolymère constitué de - ou un copolymère avec des unités de N-vinylalkylamide et/ou un (co-)polymère constitué de ou avec des unités d'acides carboxyliques α,β-insaturés ou d'amides d'acide carboxylique α,β-insaturés.

5. Enveloppe de produit alimentaire selon une ou plusieurs des revendications 1 à 4, **caractérisée en ce que** la proportion de l'au moins un polymère synthétique soluble dans l'eau est comprise entre 3 et 50% en poids, de préférence entre 10 et 40 % en poids, particulièrement de préférence entre 15 et 30 % en poids, par rapport au poids total du mélange thermoplastique.

6. Enveloppe de produit alimentaire selon une ou plusieurs des revendications 1 à 5, **caractérisée en ce que** le mélange contient au moins un additif qui influence des propriétés optiques, haptiques ou de stockage d'humidité ou le comportement au pelage.

7. Enveloppe de produit alimentaire selon la revendication 6, **caractérisée en ce que** l'au moins un additif est un polysaccharide, un agent de charge anorganique ou un pigment coloré.

8. Enveloppe de produit alimentaire selon la revendication 7, **caractérisée en ce que** l'agent de charge anorganique est constitué de poudre de quartz, de dioxyde de titane, de carbonate de calcium, de talc, de mica ou d'un autre aluminosilicate, de fibres de verre discontinues, d'autres fibres minérales ou de microbilles de verre.

9. Enveloppe de produit alimentaire selon la revendication 6 ou 7, **caractérisée en ce que** la proportion de l'au moins un additif est comprise entre 0 et 25 % en poids, de préférence entre 1 et 20 % en poids, particulièrement de préférence entre 2 et 8 % en poids, à chaque fois par rapport au poids total du mélange.

10. Enveloppe de produit alimentaire selon la revendication 7, **caractérisée en ce que** le polysaccharide est de l'amidon, de la cellulose, un exo-polysaccharide ou un dérivé de polysaccharide.

11. Enveloppe de produit alimentaire selon une ou plusieurs des revendications 1 à 10, **caractérisée en ce qu'**elle est en forme de boyau et sans soudure.

12. Enveloppe de produit alimentaire selon la revendication 11, **caractérisée en ce qu'**elle est courbée en forme de couronne.

13. Procédé de fabrication d'une enveloppe de produit alimentaire selon une ou plusieurs des revendications 1 à 12, **caractérisé en ce qu'**on plastifie à température un mélange qui comprend au moins un (co-)polyamide aliphatique et au moins un polymère synthétique soluble dans l'eau et on l'extrude au moyen d'une filière annulaire en un boyau primaire et **en ce qu'**on refroidit le boyau primaire puis on le chauffe à la température nécessaire à l'étirage et ensuite on l'étire de manière biaxiale en une enveloppe de produit alimentaire.

14. Procédé selon la revendication 13, **caractérisé en ce que** l'enveloppe est thermofixée après l'étirage.

15. Procédé selon la revendication 13, **caractérisé en ce que** l'enveloppe en forme de boyau est ensuite mise en couronne de telle sorte qu'elle prend une forme d'anneau ou de spirale.

16. Utilisation d'une enveloppe de produit alimentaire selon une ou plusieurs des revendications 1 à 12 comme enveloppe artificielle en charcuterie, de préférence comme enveloppe pour de la charcuterie cuite pouvant être fumée.
